# EUROPEAN PATENT APPLICATION

(11) **EP 0 885 942 A1**
(43) Date of publication of application: **23.12.1998**
(21) Application number: 97109865.2
(22) Date of filing: 17.06.1997
(51) Int. Cl.: C09J 153/02, A61F 13/00

(54) **Adhesive hotmelt formulation and articles constructed therefrom**

(71) Applicant: H.B. Fuller Licensing & Financing, Inc., St. Paul, Minnesota 55110-5132 (US)
(72) Inventor: Janssen, Annegret, 21337-Lüneburg (DE); Endriss, Gerhard, 85579- Neubiberg (DE)
(74) Representative: Maiwald, Walter, Dr. Dipl.-Chem.

(57) **Abstract**

The invention concerns an adhesive hotmelt formulation and an article constructed therefrom whereby at least one surface of the article is continuously or discontinuously coated with said adhesive hotmelt formulation based on SEBS' or SEP block copolymer, whereby the adhesive hotmelt formulation is permanently adhered to the article and can be removably attached to a surface such as fabric or skin in order to secure said article for a period of time without adhesive transfer or skin irritation.

## Description

The present invention relates to an adhesive hotmelt formulation and a discontinuous or continuous coating of an adhesive hotmelt formulation that is permanently adhered to at least one surface of an article constructed therefrom. The present invention particularly relates to removable or releasable adhesive hotmelt formulation permanently adhered to the article constructed therefrom and then removably attached to a surface in order to secure said article for a period of time.

The adhesive hotmelt formulation may be pattern-coated onto at least one surface of the article constructed therefrom and removably adhered to a surface such as fabric or skin without adhesive transfer.

Hotmelt formulations have been used to bond a variety of materials to many substrates. James P. Szymanski et al., U.S. Pat. No. 5,204,390, disclosed pressure-sensitive hotmelt adhesives comprising substantially saturated rubber block copolymers derived from vinyl aromatic monomers including styrene and others, and rubbery monomers, such as butylene, ethylene, isobutylene, butadiene, isoprene and others. These hotmelt compositions exhibit adhesive stability when exposed to ultra-violet light and are stable when contacted with plasticized surfaces.

Further removable or releasable hotmelt pressure-sensitive adhesives (PSA) for articles such as feminine napkins, adult incontinent pads and the like are described as "garment attachment" or "positioning" adhesives. During manufacture of such articles, the hotmelt PSA is typically slot-coated directly onto a paper stock or polyolefine film substrate and then covered with a release liner. There are a multitude of patents pertaining to adhesive compositions for tapes, labels, adhesive bandages and the like. Alper et al., EP 525 251 A1, Collins et al., US Patent 4,136,699 and Raykovitz et al., US Patent 4,704,110 specifically relate to hotmelt PSA positioning compositions for feminine napkins.

In recent years, manufacturers have attempted to replace the continuous slot-coat method with various discontinuous methods, particularly by spray application methods, such as spiral spray and melt blown techniques or by pattern coating methods, otherwise referred to as screen-printing. There are several advantages in using a pattern coating technique, including aesthetic advantages due to the variety of screen designs as well as the ability to strategically place adhesive in precise locations. The primary advantage pattern coating offered is the ability to vastly reduce adhesive consumption, since the surface area per mass of adhesive is greatly enhanced.

However, hotmelt adhesives continuously or discontinuously coated onto an article constructed therefrom exhibit hotmelt adhesive transfer to a surface such as fabric or skin when removed therefrom. Further, the hotmelt adhesives known from prior art have the drawback that they do not adhere to a surface such as skin for a period of time without causing skin irritation. Further, the adhesive used in prior art contains zinc oxide in order to counter skin irritation. Moreover, articles constructed from these hotmelt adhesives do not adhere properly to skin and can thus easily be displaced on skin. Finally, the hotmelt adhesive coating known from prior art can separate from the article due to mechanical influence.

The subject of the present invention is to provide an adhesive hotmelt formulation which exhibits adhesive stability when exposed to ultra-violet light and permanently adheres to at least one surface of an article constructed therefrom.

It is a further subject of the present invention to provide an article onto which at least one surface an adhesive hotmelt formulation is discontinuously or continuously coated, whereby the hotmelt formulation is permanently adhered to the article constructed therefrom and can be removably attached to a surface in order to secure said article for a period of time when attached to a surface such as fabric or skin without causing skin irritation.

The present invention is not restricted or limited in scope by the following examples of adhesive hotmelt formulations or articles constructed therefrom or the process of making such articles, but rather can be advantageously used for all application purposes where adhesive hotmelt formulations or articles constructed there-from are to be removably attached to a surface in order to secure an article for a period of time without adhesive transfer.

This object is achieved by an adhesive hotmelt formulation having additional adhesive properties, whereby the formulation is stable when exposed to ultra-violet light and comprises a thermoplastic rubber, a tackifying resin, an extending agent and optionally additives, whereby the formulation has a ring and ball softening point of up to 125°C and viscosity measured on a Brookfield viscosimeter spindle 27, 20 rpm, at 175°C of 500 to 20.000 mPa·s.

Preferred embodiments of the present invention are given in the sub-claims.

The adhesive hotmelt formulation according to the present invention possesses a low viscosity compared with common hotmelt adhesive formulations. A further advantage of the present invention is that the hotmelt adhesive formulation has excellent flow properties and an improved melt stability which enables a variety of techniques for depositing the hotmelt adhesive formulation onto a substrate.

Preferred techniques for manufacturing articles according to the present invention comprise continuous coating methods, such as slot-coating and various discontinuous methods, particularly spray application methods, such as spiral spray and melt-blown techniques or by pattern coating methods, otherwise referred to as screen-printing.

The adhesive hotmelt formulation of the present invention is particularly useful for pattern coating which involves extruding the formulation through a rotating screen which in turn deposits the adhesive formulation directly onto the substrate to be coated for making the articles constructed therefrom. Alternatively, the adhesive hotmelt formulation may deposit through the screen first onto release paper and then transfer coat the adhesive hotmelt formulation onto the intended surface of the article constructed therefrom. The screens typically used in this process range from about 15 mesh to about 195 mesh, preferably from about 30 to 60 mesh, more preferably from about 30 to 40 mesh. The 30 to 60 mesh screen results in individual adhesive hotmelt formulation deposits ranging in mass from as little as about 5 x 10⁻⁵g per adhesive hotmelt formulation deposit to about 0.05 g per adhesive formulation deposit. A number of individual adhesive hotmelt formulation deposits per area of substrate ranges from as little as 1 per cm² to as many as about 100 per cm². The total mass of adhesive per area ranges from as little as about 5g/m² to about 500g/m², preferably from about 15g/m² to 300g/m², more preferably from about 60g/m² to 170g/m², and most preferably 85g/m² to 150g/m². Amounts greater than about 50g/m² exceed the coating weight currently used for most slot-coat applications. However, lower or higher amounts may be useful for some applications requiring a decreased or increased adhesion.

As previously mentioned, discontinuous coating methods, such as spray and pattern coating, are particularly preferred over slot coating, due to the possibility of greatly increasing the surface area per mass of adhesive and enhancing the level of adhesion. This increase in surface area provides sufficient adhesion, comparable to adhesion levels of slot-coat applications at greatly reduced adhesive consumption levels.

Discontinuous coating, such as pattern coating, provide the possibility of reducing adhesive consumption when coated onto fabrics by as much as 75%.

Moreover, pattern coating offers the advantage that small amounts of adhesive hotmelt formulation can be strategically placed in precise locations. This aspect is particularly important for applying the adhesive hotmelt formulation onto nonwoven or woven stretchable bandages or breathable substrates, such as gauze, for better fitting.

Preferably, the adhesive hotmelt formulation is pattern-coated directly onto the substrate. When this technique is employed the present invention is not limited to any particular shape of individual adhesive deposits. Since screens are typically manufactured having square-shaped voids, the resulting adhesive deposit is a four-sided pyramid having a square base. However, triangular, circular, elliptical, etc. voids are also contemplated. Hemispherical adhesive deposits are anticipated to be preferred.

In order for the adhesive hotmelt formulation to be suitable for being permanently adhered to the article constructed therefrom and to be removably adhered to a surface such as fabric or skin without adhesive transfer, in particular without causing skin irritation, the adhesive hotmelt formulation must have a low viscosity, less than 20000 mPa·s at 175°C, preferably 500 to 12000 mPa·s, more preferably 800 to 5000 mPa·s, most preferably 825 to 3000 mPa·s.

Adhesive hotmelt formulations having a Brookfield viscosity of less than 500 mPa·s and above 20000 mPa·s at 175°C can not beneficially be used with articles for the present invention, since they are not easy in processing and/or can cause skin irritation or adhesive transfer to skin when removed.

The adhesive hotmelt formulation according to the present invention has a ring and ball softening point up to 125°C, preferably of 80° to 110°C, more preferably of 90° to 105°C and most preferably of 95° to 103°C. Preferably the adhesive hotmelt formulation also has a low viscosity at application temperature to ensure ease in processing. This aspect of low ring and ball softening point and low viscosity is of particular importance for direct coating of the adhesive hotmelt formulation onto at least one surface of the article constructed therefrom.

The adhesive hotmelt formulation according to the present invention has a needle penetration value at 25°C of 3 to 12 mm, preferably 4 to 11 mm, more preferably 5 to 10 mm, and most preferably above 7 mm.

Moreover, the viscosity and needle penetration value of the adhesive hotmelt formulation of the present invention is particularly important for that the article constructed therefrom removably adheres to a surface such as fabric or skin without causing adhesive transfer and skin irritation. An article coated with the adhesive formulation exhibits adhesive transfer tendencies if the viscosity is below 500 mPa·s at 175°C. When the viscosity is too high, the adhesive layer of the article according to the present invention is not deformable to some extent, such as skin or fabric, so that the adhesive layer can separate from the article constructed therefrom and causes skin irritation, for example due to mechanical influence.

The adhesive hotmelt formulation according to the present invention has an tensile strength of up to 1 N/mm², preferably 0.10 to 0.80 N/mm², more preferably 0.30 to 0.70 N/mm².

However, a low tensile strength and a high elongation at break makes the adhesive hotmelt formulation coating deformable such as skin or fabric, so that the article constructed therefrom, when removably attached to a skin surface does not cause skin irritation due to the components of the adhesive hotmelt formulation.

Since the adhesive hotmelt formulation according to the present invention causes practically no skin irritation, it is not necessary to add zinc oxide to the adhesive formulation. However, the addition of a small amount of zinc oxide can be beneficial.

Further, the adhesive hotmelt formulations according to the present invention having an elongation at break from 500% to 1500%, preferably 600% to 1300%, more preferably 800% to 1200% and most preferably 830% to 1150%.

The adhesive hotmelt formulation according to the present invention comprises:
from 5 to 50 weight-%, preferably 15 to 38 weight-%, more preferably 15 to 35 weight-% and most preferably 20 to 30 weight-% of a thermoplastic rubber type material of SEBS' and/or SEP block copolymers, wherein the units S and S' are derived from polymer blocks containing one or more identical or different styrene groups, whereby preferably the unit EB of SEBS' block copolymer is derived from an elastomeric middle block containing poly(ethylene-butylene) blocks, and the unit EP of SEP block copolymer is preferably derived from an elastomeric middle block containing poly(ethylene-propylene) blocks, wherein the elastomeric middle blocks containing ethylene-butylene or ethylene-propylene monomer groups are fully hydrogenated;
30 to 80 weight-%, preferably 35 to 65 weight-%, more preferably 40 to 60 weight-%, and most preferably 40 to 45 weight-% of at least one tackifying thermoplastic resin with saturated aliphatic groups having adhesive properties;
5 to 55 weight-%, preferably 13 to 35 weight-% and more preferably 20 to 30 weight-% of at least one extending agent with saturated parafinic groups; and
0 to 50 weight-%, preferably 0.1 to 10 weight-% and more preferably 0.1 to 5.0 weight-% of additive(s).

Preferred extending agents have plasticizing properties.

In a preferred embodiment, the adhesive hotmelt formulation of the present invention can comprise a mixture of saturated thermoplastic rubber-type materials and can be modified with one or more common saturated tackifying resins and/or saturated extending agents, preferably a plasticizing diluent, such as white mineral oils.

The preferred thermoplastic rubber-type block-copolymer components of SEBS'-type are commercially available under the trademark KRATON G 1650 (SEBS'), KRATON G 1652 (SEBS'), KRATON G 1657 (SEBS'), KRATON G 1726 (SEBS') from the Shell Company.

The preferred thermoplastic rubber-type SEP block copolymers are commercially available under the trademark KRATON G-1701X (SEP) and KRATON G-1702X (SEP) from the Shell Company.

Preferred thermoplastic rubber-type SEBS' or SEP block-copolymers have a styrene/ethylene-butylene ratio and/or styrene/ethylene-propylene ratio of 10/90 up to 40/60 weight-% and more preferably 13/87, 28/72, 29/71, 30/70 or 37/63 weight-%.

Common commercially available saturated tackifying resins suitable for use in the present invention are Arkon P 90, Arkon P 125, Arkon P 140 from the Arakawa Chemicals Industries Ltd.; ESCOREZ 5300, ESCOREZ 5320, ESCOREZ 5340 and ESCOREZ 5380 from the Exxon Chemical Company; KRISTALEX F85 and KRISTALEX F100 from the company Hercules GmbH.

Preferred saturated tackifying resins are hydrogenated aliphatic or aliphatic aromatic resins and/or α-methylstyrene based resins.

The extending agent with saturated parafinic groups is preferably a plasticizing diluent, in particular a parafinic oil. Suitable plasticizing diluents are e.g. oils with a major amount of parafinic along with minor amounts of naphthenic and, optionally, aromatic components. Preferably, the plasticizing diluent is an oil which comprises a parafinic content of 50 to 90 weight-%, a naphthenic content of 10 to 40 weight-% and an aromatic content of a maximum of 10 weight-%. Preferred plasticizing diluents are white mineral oils. Such oils are commercially available under the trademarks CATENEX, e.g. CATENEX P941 of the Shell Company or Shell Oil 4142 FU, as well as Kaydol Oil of the Witco Company.

Optionally, in order to modify the physical and chemical material properties, in particular to adjust the adhesive properties of the adhesive hotmelt formulation, further common additives, such as inorganic filling agents, zinc oxid, pigments, plasticizer, additiva such as anti-oxidising and/or light-protecting agents are added.

A useful plasticizer for use in this adhesive hotmelt formulation comprises liquid tackifying resins, polybutene, liquid elastomers and the like.

A minimal amount of said liquid plasticizer can have a beneficial effect on the adhesive hotmelt formulation in order to further soften the block copolymer and solid tackifying resin. Also, the plasticizer improves the compliance, increases the elongation and needle penetration properties as well as reduces the viscosity of the adhesive hotmelt formulation.

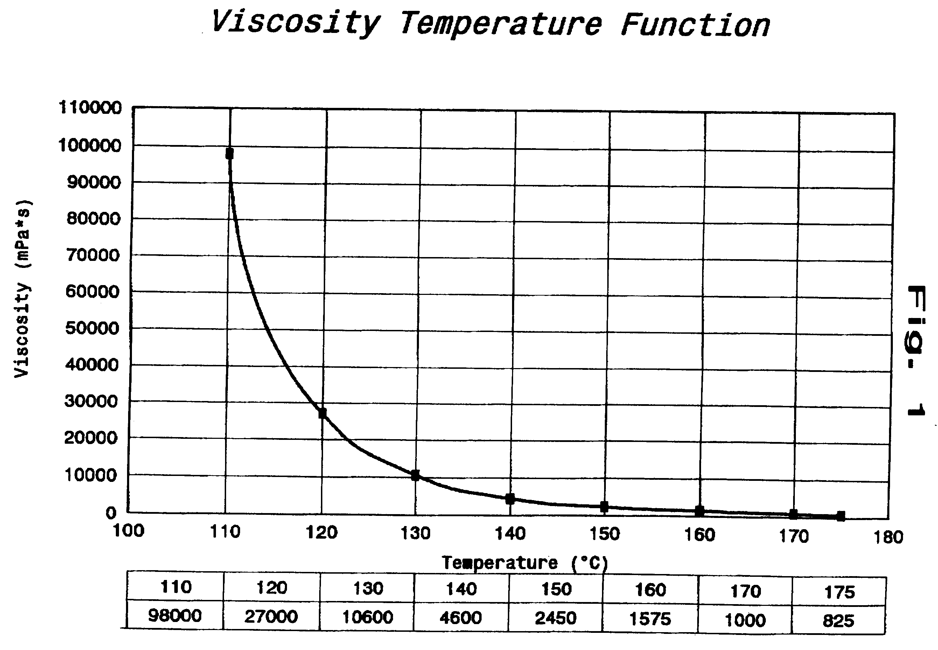

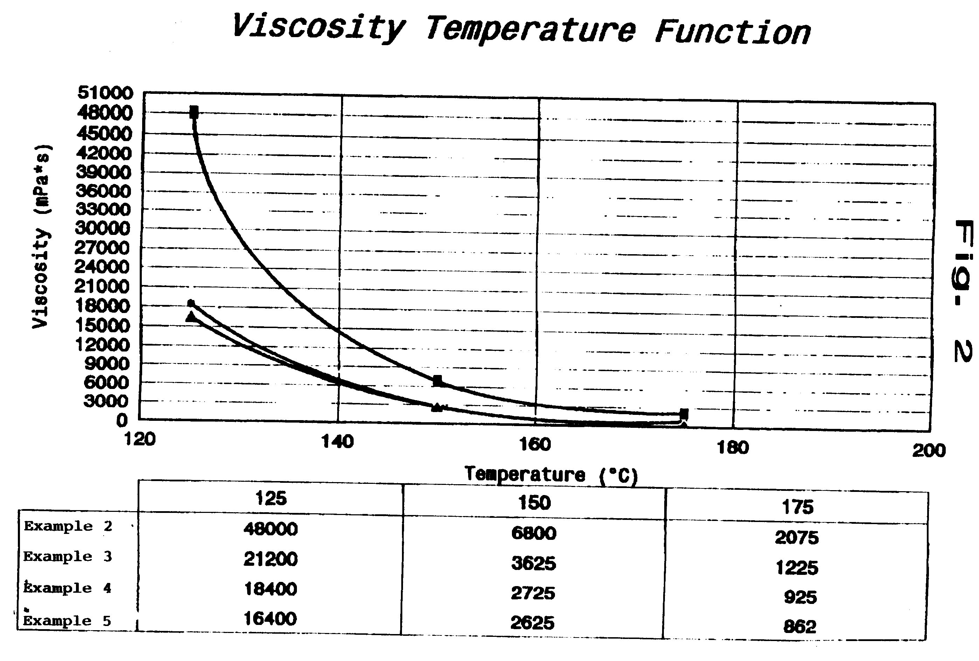

The viscosity of the adhesive hotmelt formulation of Examples 1 to 5 are graphically illustrated in Figures 1 to 2.
- Fig. 1: shows a graph of the viscosity temperature function of the adhesive hotmelt formulation of Example 1.
- Fig. 2: shows a graph of the viscosity temperature function of the adhesive hotmelt formulation according to Examples 2 to 5.

As is known in the art, various other components can be added to modify the tack, colour, odour, etc. of a hotmelt adhesive. It is generally preferred that the other components or ingredients should be relatively inert and have negligible effects on the properties contributed by the block copolymer, tackifying agent, and extending agents, such as plasticizer diluents. Antioxidantients and other stabilising ingredients can also be added to protect the adhesive from various heat and light induced degradation, but are not essential to the composition of this invention.

It is an important aspect of the present invention to resist UV-induced reaction. Thus, the adhesive hotmelt formulation comprises rubber-type block copolymers, tackifying resins and extending agents, such as plasticizer diluents, wherein the aliphatic part is saturated.

The term "saturated" as used in the description means that the aliphatic groups are fully hydrogenated.

The present invention can also be exemplified by the following non-limiting examples.

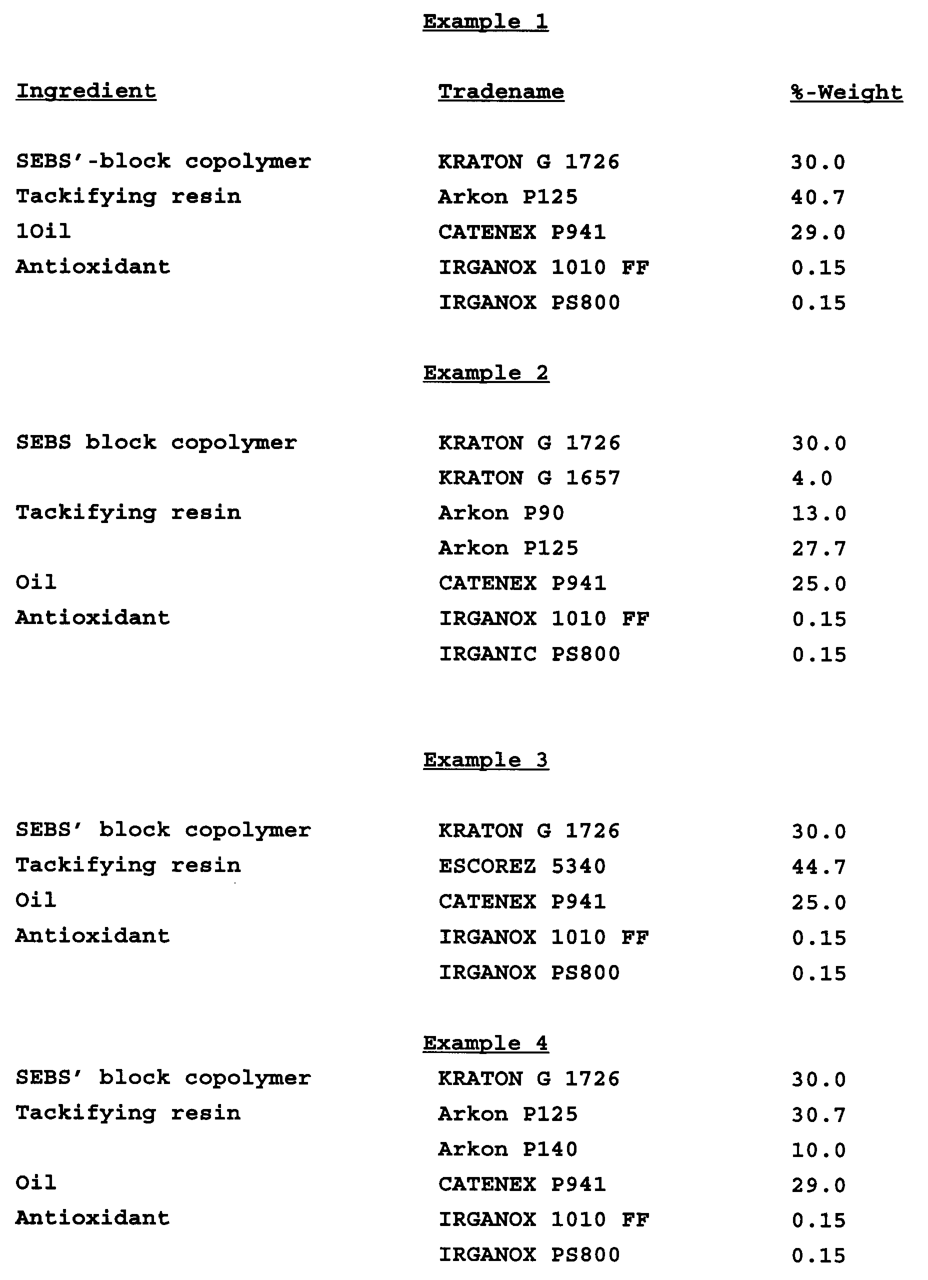

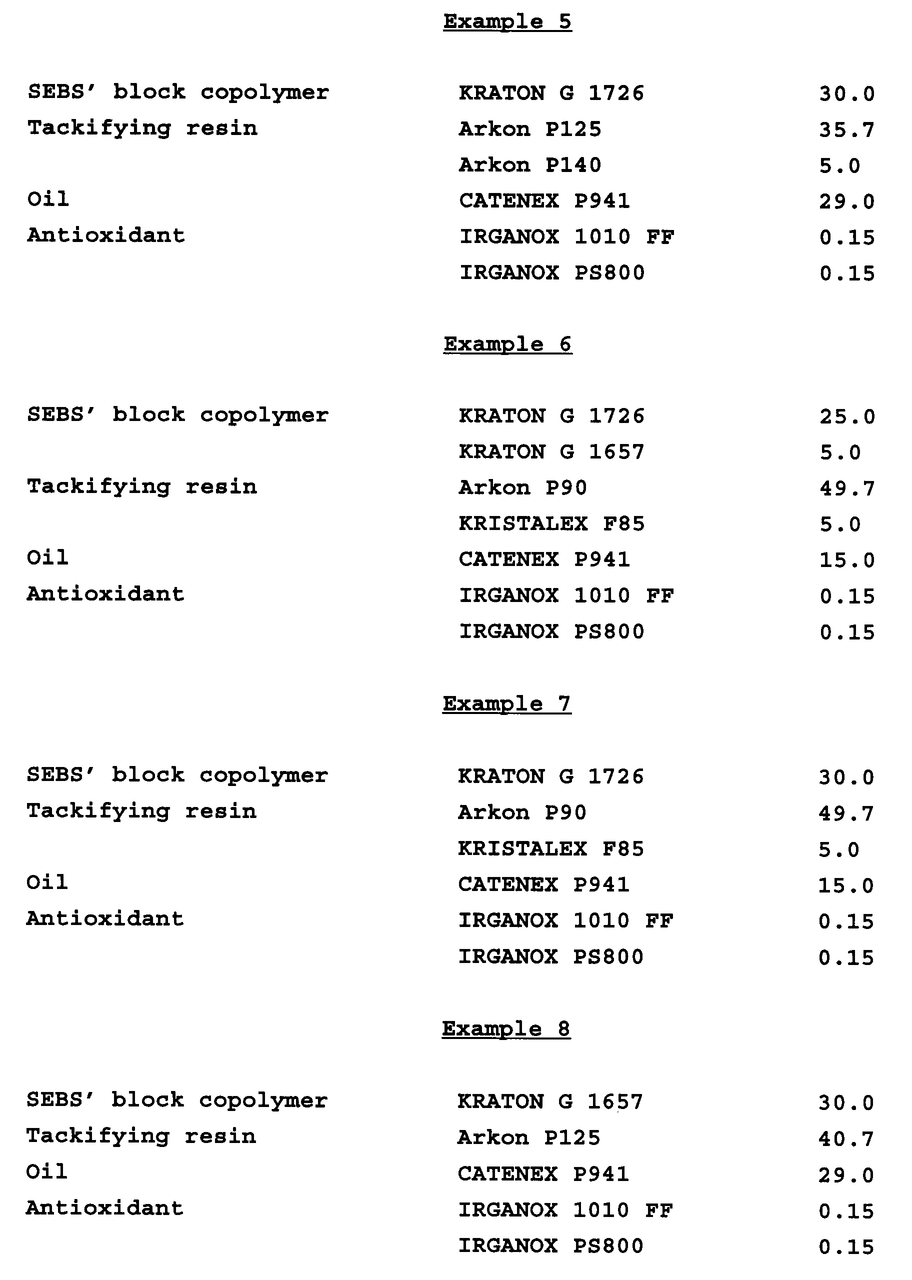

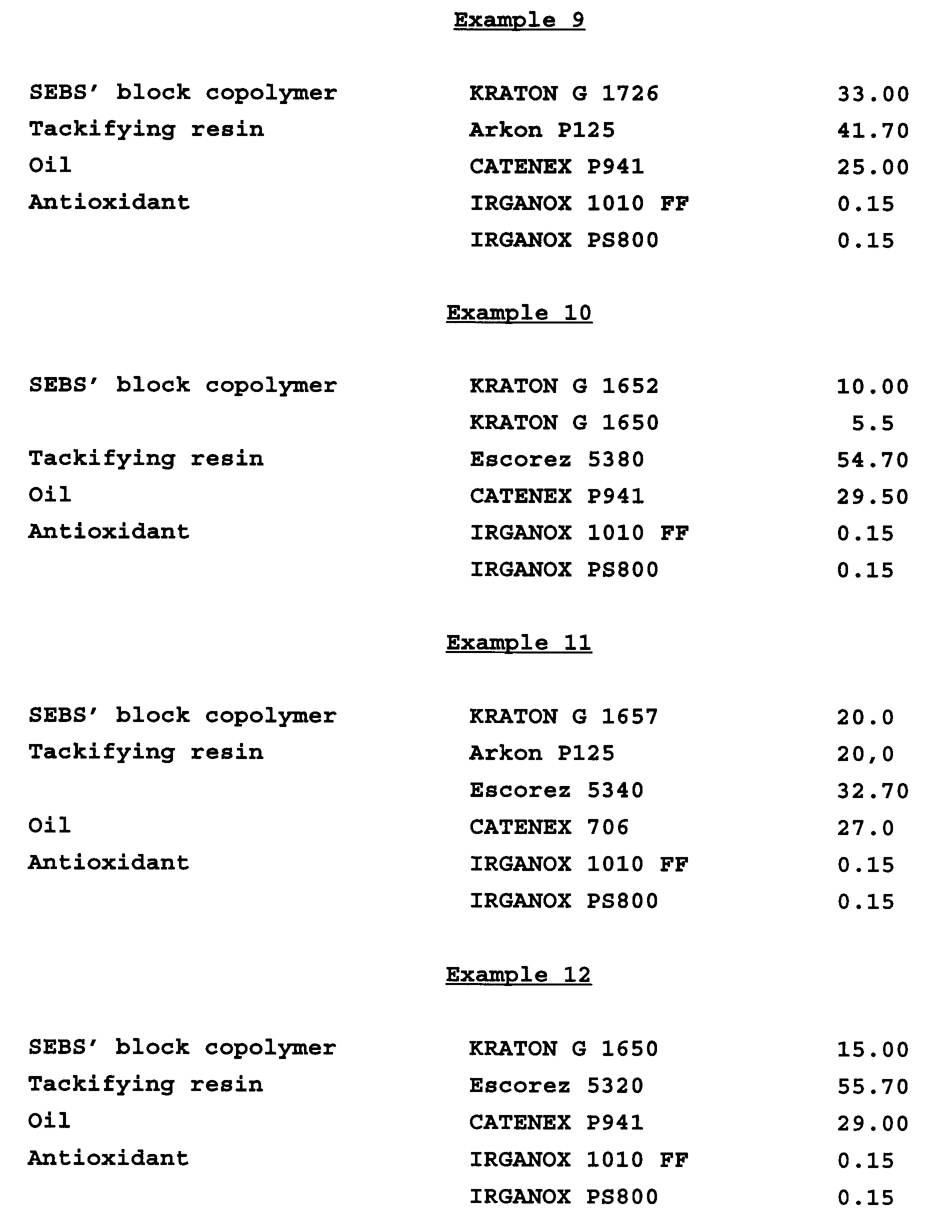

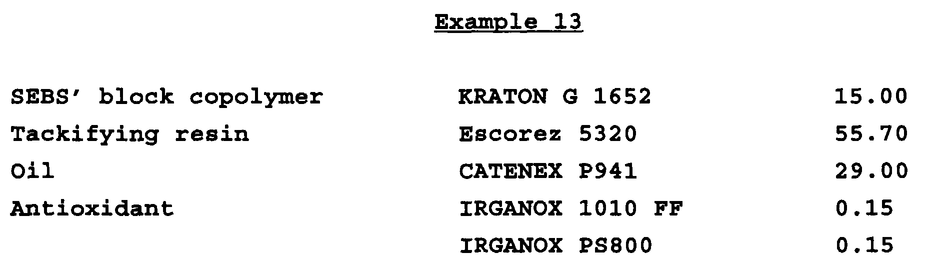

Example 1-13 were made in a vertical mixer using known hotmelt adhesive blending techniques.

### Preparation of coated articles

The mixture of the components, as described in each of the Examples 1 to 13 were melted at 150°C to 160°C in a standard melting apparatus and extruded through an extrusion nozzle or through a screen directly onto the intended surface of the article constructed therefrom. Alternatively, the melted adhesive hotmelt formulation is first extruded onto release paper and then transfer coated onto the intended surface of the article constructed therefrom, such as plasters, gauze and bandages for medical purposes.

### Preparation of coated samples (see Table 1 and Table 2)

The components were melted, as in Example 14, in a melting apparatus and then full-coated onto the textile. The adhesion of the coated textile against steel and skin was measured.

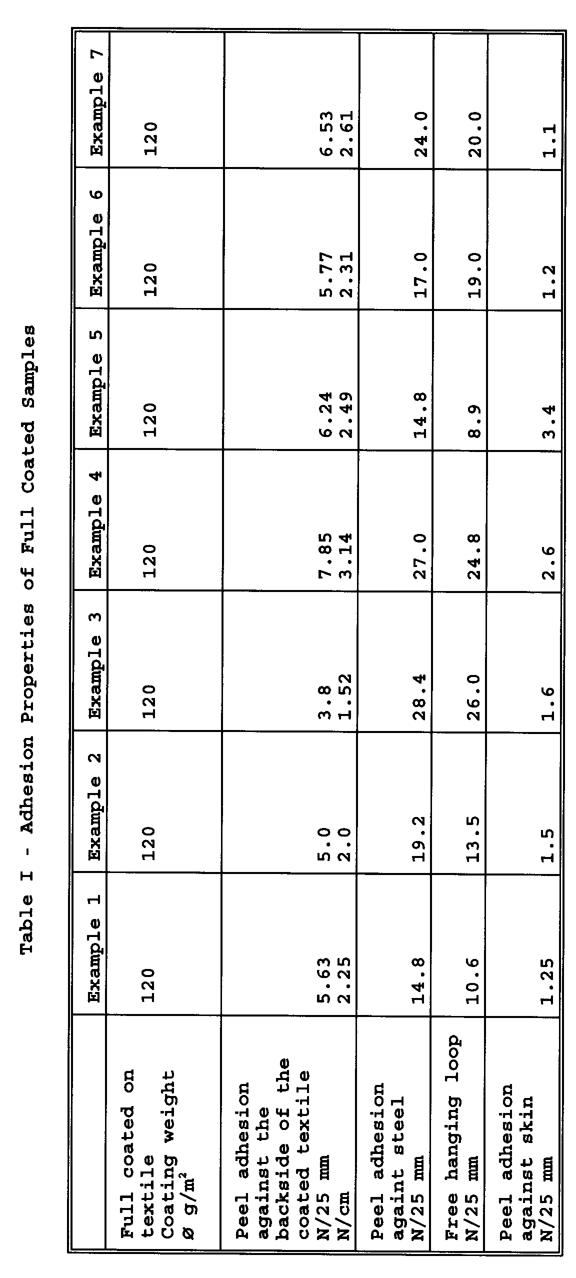

**Table II**

| Adhesion Properties of Full Coated Samples | | | | | | |
|---|---|---|---|---|---|---|
| | Example 8 | Example 9 | Example 10 | Example 11 | Example 12 | Example 13 |
| Full coated on textile | 120 | 120 | 120 | 120 | 120 | 120 |
| Coating weight φ g/m² | | | | | | |

| Peel adhesion against the backside of the coated textile | | | | | | |
|---|---|---|---|---|---|---|
| N/25 mm | 3.75 | 4.75 | 3.5 | 5.85 | | |
| N/cm | 1.50 | 1.9 | 1.4 | 2.34 | | |

**Table III**

| Physical Properties | | | | | | | |
|---|---|---|---|---|---|---|---|
| | Example 1 | Example 2 | Example 3 | Example 4 | Example 5 | Example 6 | Example 7 |
| Viscosity measured on a Brookfield Viscosimeter, spindle 27 20 rpm at 175°C [mPa·s] | 865 | 2080 | 1200 | 925 | 868 | 1850 | 1062 |
| Ring and Ball softening point [°C] | 95 | 100 | 97 | 103 | 99 | 94 | 96 |
| Needle penetration at 25°C [mm] | 9.8 | 7.9 | 8.5 | 9.9 | 11.2 | 6.4 | 7.0 |

**Table IV**

| Physical Properties | | | | | | |
|---|---|---|---|---|---|---|
| | Example 8 | Example 9 | Example 10 | Example 11 | Example 12 | Example 13 |
| Viscosity measured on a Brookfield Viscosimeter, spindle 27 20 rpm at 175°C [mPa·s] | 11900 (5 rpm) | 1360 | 600 | 4225 (10 rpm) | 1500 | 900 |
| Ring and Ball softening point [°C] | 90 | 102 | 80 | 77 | 104 | 85 |
| Needle penetration at 25°C [mm] | 5.5 | 7.7 | 8.0 | 7.0 | 7.2 | 7.5 |
| Tensile strength [N/mm²] | | | 0.32 | | 0.67 | 0.40 |
| Elongation at break [%] | | | 1124 | | 985 | 838 |

Articles whereon at least one surface is continuously or discontinuously coated with the adhesive hotmelt formulation according to the present invention comprises plasters, bandages, feminine napkins, adult incontinent pads, diapers, tapes and the like. The articles according to the present invention are in particular useful for use as plasters, gauze and bandages for medical purposes.

## Claims

1. An adhesive hotmelt formulation characterized in that the adhesive hotmelt formulation is stable when exposed to ultraviolet light and comprises:
a) 5 to 50 weight-%, preferably 15 to 38 weight-%, more preferably 15 to 35 weight-% and most preferably 20 to 30 weight-% of a thermoplastic rubber type material of SEBS' and/or SEP block copolymers, wherein the units S and S' are derived from polymer blocks containing one or more identical or different styrene groups, whereby preferably the unit EB of SEBS' block copolymer is derived from an elastomeric middle block containing poly(ethylene-butylene) blocks, and the unit EP of SEP block copolymer is preferably derived from an elastomeric middle block containing poly(ethylene-propylene) blocks, wherein the elastomeric middle blocks containing ethylene-butylene or ethylene-propylene monomer groups are fully hydrogenated;
b) 30 to 80 weight-%, preferably 35 to 65 weight-%, more preferably 40 to 60 weight-%, and most preferably 40 to 45 weight-% of at least one tackifying thermoplastic resin with saturated aliphatic groups having adhesive properties;
c) 5 to 55 weight-%, preferably 13 to 35 weight-% and more preferably 20 to 30 weight-% of at least one extending agent with saturated parafinic groups; and
d) 0 to 50 weight-%, preferably 0.1 to 10 weight-% and more preferably 0.1 to 5.0 weight-% of additive(s), whereby the adhesive hotmelt formulation has a ring and ball softening point up to 125°C, an tensile strength of up to 1 N/mm² and viscosity measured on a Brookfield viscosimeter spindle 27, 20 rpm, at 175°C of 500 to 20.000 mPa·s.

2. Adhesive hotmelt formulation according to claim 1,
**characterized in that** the thermoplastic rubber-type SEBS'- or SEP-block-copolymer has a styrene/ethylene-butylene ratio or styrene/ethylene-propylene ratio of 10/90 up to 40/60 weight-%.

3. Adhesive hotmelt formulation according to claim 1,
**characterized in that** the tackifying thermoplastic resin is selected from the group comprising hydrogenated aliphatic or aliphatic aromatic resin, such as ESCOREZ, α-methylstyrene-based resin, such as KRISTALEX, and derivatives thereof.

4. Adhesive hotmelt formulation according to claim 1,
**characterized in that** the extending agent is a plasticizing diluent which is an oil comprising a parafinic content of 50 to 90 weight-%, a naphthenic content of 10 to 40 weight-% and an aromatic content of a maximum of 10 weight-%, such as CATENEX or Kaydol.

5. Adhesive hotmelt formulation according to claim 1,
**characterized in that** the adhesives are selected from the group comprising inorganic filling agents, zinc oxid, pigments, plasticizer, colouring agents, odorizing/deodorizing agents, additiva such as anti-oxidising and/or light-protecting agents.

6. Adhesive hotmelt formulation according to any one of the preceding claims,
**characterized in that** the adhesive hotmelt formulation has a ring and ball softening point preferably of 80° to 110°C, more preferably of 90°C to 105°C and most preferably of 95°C to 103°C.

7. Adhesive hotmelt formulation according to any one of the preceding claims,
**characterized in that** the adhesive hotmelt formulation has a viscosity of preferably 500 to 12000 mPa·s, more preferably 800 to 5000 mPa·s, most preferably 825 to 3000 mPa·s.

8. Adhesive hotmelt formulation according to any one of the preceding claims,
**characterized in that** the adhesive hotmelt formulation has an tensile strength of preferably 0.10 to 0.80 N/mm², more preferably 0.30 to 0.70 N/mm².

9. Adhesive hotmelt formulation according to any one of the preceding claims,
**characterized in that** the adhesive hotmelt formulation has an elongation at break from 500% to 1500%, preferably 600% to 1300%, more preferably 800% to 1200% and most preferably 830% to 1150%.

10. Adhesive hotmelt formulation according to any one of the preceding claims,
**characterized in that** the adhesive hotmelt formulation has a needle penetration value at 25°C of 3 to 12 mm, preferably 4 to 11 mm, more preferably 5 to 10 mm, and most preferably above 7 mm.

11. Adhesive hotmelt formulation according to any one of the preceding claims,
**characterized in that** the extending agent has plasticizing properties.

12. An article whereby at least one surface is coated with an adhesive hotmelt formulation according to claims 1 to 11,
**characterized in that** the adhesive hotmelt formulation is discontinuously or continuously coated to at least one surface of the article constructed therefrom, whereby the adhesive hotmelt formulation is permanently adhered to the article constructed therefrom and removably attached to a surface such as skin or fabric in order to secure said article for a period of time without causing skin irritation and/or adhesive transfer to said surface when removed.

13. Article according to claim 12,
**characterized in that** the number of individual adhesive hotmelt formulation deposits per area of coated article ranges from as little as 1 per cm² to as many as about 100.000 per cm², whereby the total mass of adhesive hotmelt formulation per area ranges from as little as about 5g/m² to about 500g/m², preferably from about 15g/m² to 300g/m², more preferably from about 60g/m² to 170gm², and most preferably 85g/m² to 150g/m².

14. Article according to one of claims 12 to 13,
**characterized in that** the article is a plaster, bandage, feminine napin, adult incontinent pad, diaper, tape or the like.

15. Method for the production of an article according to any one of claims 12 to 14,
**characterized in that** the adhesive hotmelt formulation of claims 1 to 11 is continuously coated, such as slot-coated, or discontinuously coated by spray application methods, such as spiral spray, by melt-blown techniques or by screen-printing methods.

16. Method for the production of an article according to claim 15,
**characterized in that** the screens used in the screen-printing process range from about 15 mesh to about 195 mesh, preferably from about 30 to 60 mesh, more preferably from about 30 to 40 mesh, whereby the 30 to 60 mesh screen results in individual adhesive hotmelt formulation deposits ranging in mass from as little as about 5 to 10⁻⁵g per adhesive hotmelt formulation deposit to about 0.05g per adhesive hotmelt formulation deposit.

17. Use of the adhesive hotmelt formulation of any one of claims 1 to 11 for preparing an article according to claims 12 to 14.
